Europäisches Patentamt

European Patent Office

Office européen des brevets

(19)

(11) **EP 0 768 932 B1**

(12) **EUROPÄISCHE PATENTSCHRIFT**

(45) Veröffentlichungstag und Bekanntmachung des Hinweises auf die Patenterteilung:
**09.01.2002   Patentblatt 2002/02**

(51) Int Cl.⁷: **B23K 26/08**, B41C 1/05

(21) Anmeldenummer: **96907978.9**

(86) Internationale Anmeldenummer:
**PCT/CH96/00130**

(22) Anmeldetag: **12.04.1996**

(87) Internationale Veröffentlichungsnummer:
**WO 96/34718 (07.11.1996 Gazette 1996/49)**

(54) **VERFAHREN UND VORRICHTUNG ZUR HERSTELLUNG VON RASTERNÄPFCHEN IN DER OBERFLÄCHE EINES TIEFDRUCKZYLINDERS**

PROCESS AND DEVICE FOR PRODUCING GRID STEPS IN THE SURFACE OF A ROTOGRAVURE CYLINDER

PROCEDE ET DISPOSITIF POUR LA PRODUCTION DE CAVITES DE TRAME A LA SURFACE D'UN CYLINDRE DE ROTOGRAVURE

(84) Benannte Vertragsstaaten:
**DE FR GB IT NL**

(30) Priorität: **03.05.1995   CH 126295**

(43) Veröffentlichungstag der Anmeldung:
**23.04.1997   Patentblatt 1997/17**

(73) Patentinhaber: **MDC Max Dätwyler Bleienbach AG CH-3368 Bleienbach (CH)**

(72) Erfinder:
• **FRAUCHIGER, Jakob CH-3652 Hilterfingen (CH)**
• **BROCKELT, Andreas, C. CH-4923 Wynau (CH)**
• **HENNIG, Guido CH-4923 Wynau (CH)**

(74) Vertreter: **Roshardt, Werner Alfred, Dipl.-Phys. Keller & Partner Patentanwälte AG Schmiedenplatz 5 Postfach 3000 Bern 7 (CH)**

(56) Entgegenhaltungen:
**WO-A-92/09399          WO-A-93/25387 DE-A- 4 212 390**

**Beschreibung**

Die Erfindung betrifft ein Verfahren und eine Vorrichtung zur Herstellung von Rasternäpfchen in der Oberfläche eines Tiefdruckzylinders nach dem Oberbegriff des Patentanspruchs 1, bzw. des Patentanspruchs 6.

Ein solches Verfahren und eine solche Vorrichtung ist beispielsweise bekannt aus WO-A-92/09399. Dort wird der Tiefdruckzylinder von einem Drehantrieb mit einer konstanten Drehgeschwindigkeit gedreht und von einer Laserlichtquelle bearbeitet, so dass in dessen Oberfläche Rasternäpfchen entstehen. Der als kontinuierliche Welle emittierte Laserstrahl wird von einer Lasersteuerung gepulst und in seiner Leistung gesteuert. Ein Bearbeitungskopf, der aus einem Spiegel, einem akusto-optischen Modulator und einer optischen Linse besteht, wird längs des Tiefdruckzylinders bewegt. Der gepulste Laserstrahl wird vom Spiegel umgelenkt und durch den akusto-optischen Modulator entsprechend der Drehgeschwindigkeit nachgeführt und in einem bestimmten Bearbeitungsmodus auf die Oberfläche des Tiefdruckzylinders gerichtet. Die Steuerung des akusto-optischen Modulators geschieht ebenfalls durch die Lasersteuerung. Es wird ausdrücklich darauf hingewiesen, dass die Bearbeitung von nebeneinander liegenden Rasternäpfchen kaum durchführbar ist, da durch die starke lokale Erwärmung der Zylinderoberfläche Durchbrüche zum benachbarten Rasternäpfchen auftreten könnten. Aus diesem Grund wird ein Bearbeitungsmodus vorgeschlagen, bei welchem der Laserstrahl durch den akusto-optischen Modulator so umgelenkt wird, dass beispielsweise ausgehend von einem ausgehobenen Rasternäpfchen zunächst zwei vorgesehene Rasternäpfchen vorwärts übersprungen und das darauffolgende Rasternäpfchen ausgehoben und dann zwei vorgesehene Rasternäpfchen rückwärts übersprungen und das darauffolgende Rasternäpfchen ausgehoben wird. Somit sind die ausgehobenen Rasternäpfchen genügend abgekühlt, um ein benachbartes ohne Wanddurchbrüche herzustellen. Falls die Energie zur Aushebung eines grösseren Rasternäpfchens nicht ausreicht, wird der Laserstrahl nach dem Abkühlen nachträglich nochmals darauf gerichtet. Aus allen diesen Angaben entnimmt der Fachmann, dass die Drehgeschwindigkeit des Tiefdruckzylinders relativ gering und die Bearbeitungszeit für ein einzelnes Rasternäpfchen relativ gross sein muss.

Der vorliegenden Erfindung liegt die Aufgabe zugrunde, ein Verfahren und eine Vorrichtung zur Herstellung von Rasternäpfchen in der Oberfläche eines Tiefdruckzylinders anzugeben, die eine wesentlich schnellere Bearbeitung von direkt benachbarten Rasternäpfchen erlauben.

Diese Aufgabe wird durch ein Verfahren mit den Merkmalen des Patentanspruchs 1 und durch eine Vorrichtung mit den Merkmalen des Patentanspruch 6 gelöst.

Die Dreh- und Bearbeitungsgeschwindigkeit der Oberfläche des Tiefdruckzylinders wird erfindungsgemäss um ein Mehrfaches erhöht, indem wenigstens zwei gepulste Laserstrahlen verwendet werden.

Für die Aushebung von Rasternäpfchen mit unterschiedlichen Volumina ist dabei die Einstellung der dafür jeweils benötigten Energie von besonderer Bedeutung.

Die Erfindung beruht auf der Erkenntnis, dass die Leistung der Laserlichtquelle derart eingestellt werden soll, dass mit einem einzigen Laserstrahlimpuls mit einer kurzen Impulslänge das Rasternäpfchen mit dem maximal erforderlichen Volumen ausgehoben werden kann. Für die Aushebung eines Rasternäpfchens mit einem geringeren Volumen wird die dazu benötigte Energie durch einen akusto-optischen Modulator eingestellt, d.h. aufgrund der an den Modulator angelegten elektrischen RF-Leistung wird die Intensität des Laserstrahlimpulses festgelegt. Diese Art der Leistungssteuerung ist wesentlich schneller als die herkömmliche mit einer elektro-mechanischen oder elektro-optischen Einrichtung, die mit Zeitverzögerungen ansprechen und bei höheren Geschwindigkeiten weniger präzise funktionieren.

Weitere Vorteile der Erfindung ergeben sich aus den abhängigen Ansprüchen und aus der nachfolgenden Beschreibung. Dort wird die Erfindung anhand eines in den schematischen Zeichnungen dargestellten Ausführungsbeispieles näher erläutert. Es zeigt:

Fig. 1   eine Lasergravurmaschine mit einem zu bearbeitenden Tiefdruckzylinder mit einer Laserlichtquelle (diese Lasergravurmaschine ist vom Schutzumfang der Patentansprüche nicht umfaßt),

Fig. 2   eine erfindungsgemässe Lasergravurmaschine mit einem zu bearbeitenden Tiefdruckzylinder mit zwei Laserlichtquellen,

Fig. 3   eine perspektivische Darstellung eines akusto-optischen Modulators,

Fig. 4   eine schematische Darstellung zur Erklärung der Wirkungsweise des akusto-optischen Modulators,

Fig. 5   eine zeitliche Darstellung eines wandernden Schallfeldes und eines Laserstrahlimpulses, und

Fig. 6   eine Darstellung der Laserpulse der beiden Laserlichtquellen der Figur 2.

In den Figuren sind für dieselben Elemente jeweils dieselben Bezugszeichen verwendet, und gelten erstmalige Erklärungen zu den Elementen für alle Figuren, wenn nicht ausdrücklich anders erwähnt.

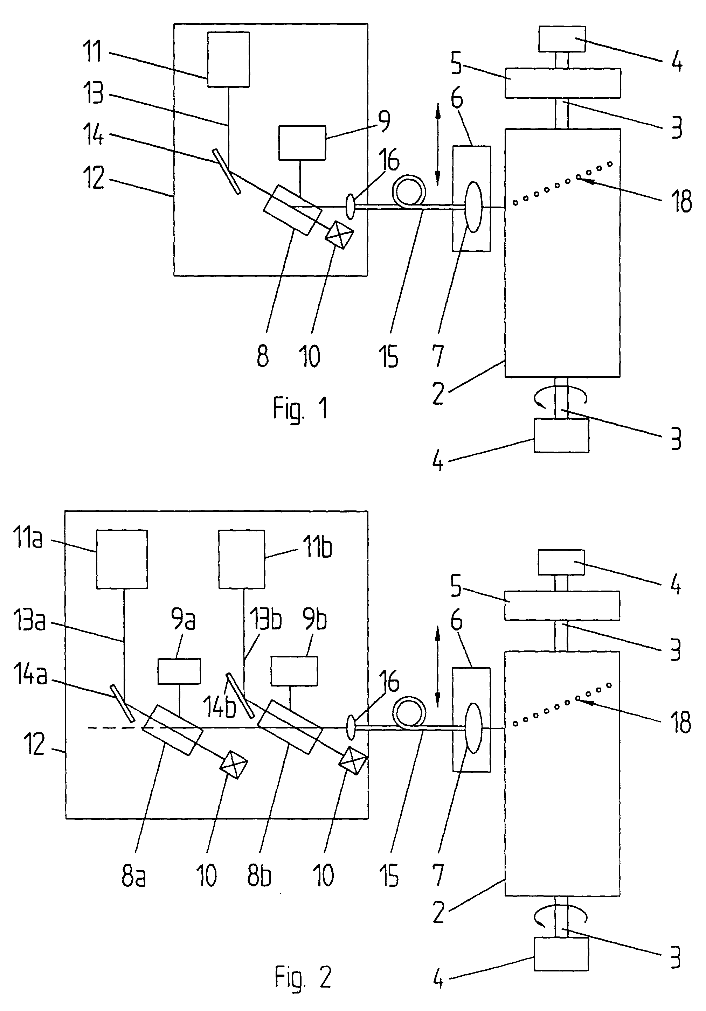

In Figur 1 ist eine Lasergravurmaschine 1 für einen zu bearbeitenden Tiefdruckzylinder 2 rein schematisch dargestellt. Der mechanische Aufbau einer solchen Maschine 1 ist allgemein bekannt und wird hier nicht in weiteren Einzelheiten beschrieben. Der Tiefdruckzylinder 2 ist an seinen Wellenenden 3 auf Wellenlagern 4 drehbar gelagert und wird von einem Drehantrieb 5 mit einer vorgegebenen konstanten Drehgeschwindigkeit gedreht. Eine optische Linse 7 ist auf einem fahrbaren Wagen 6 angeordnet, der in Längsrichtung zum Tiefdruckzylinder 2 hin- und herbewegbar ist (siehe Pfeil). Ein akusto-optischer Modulator 8 mit einem elektrischen RF-Generator 9 und einem Absorber 10 sind zusammen mit einer Laserlichtquelle 11 auf einem ortsfesten Tisch 12 vorgesehen. Der von der Laserlichtquelle 11 emittierte Laserstrahl 13 wird von einem Spiegel 14 umgelenkt und auf den akusto-optischen Modulator 8 gerichtet. Zwischen dem Modulator 8 und der optischen Linse 7 ist ein langer biegsamer Lichtwellenleiter 15 mit einer den Laserstrahl 13 einkoppelnden konvexen Linse 16 vorgesehen. Der Lichtwellenleiter 15 hat einen Durchmesser von etwa 0,5 mm mit einem äusseren Schlutzschlauch mit einem Durchmesser von etwa 10 mm und einer Länge von typischerweise etwa 25 m. Als Laserlichtquelle 11 hat sich vor allem ein gütegeschalteter Nd:YAG Laser mit einer Wellenlänge von 1,064 µm bewährt. In der bevorzugten Anwendung werden diese Laser im multimoden Betrieb eingesetzt, bei welchem die nächsthöheren Ordnungen ($TEM_{mn}$; wobei n, m ganzzahlig) dem transversal fundamentalen Modus $TEM_{00}$ überlagert sind, wodurch die Leistung des Laserstrahlpulses bedeutend vergrössert wird. Wesentlich ist dabei, dass die Laser einen in Energie und Spitzenleistung langzeitstabilen Pulszug identischer Impulse mit sehr geringen Toleranzabweichungen von +/- 0,5 % liefern. Die Energie eines einzigen Laserimpulses beträgt typischerweise etwa 5 mJ bis 10 mJ.

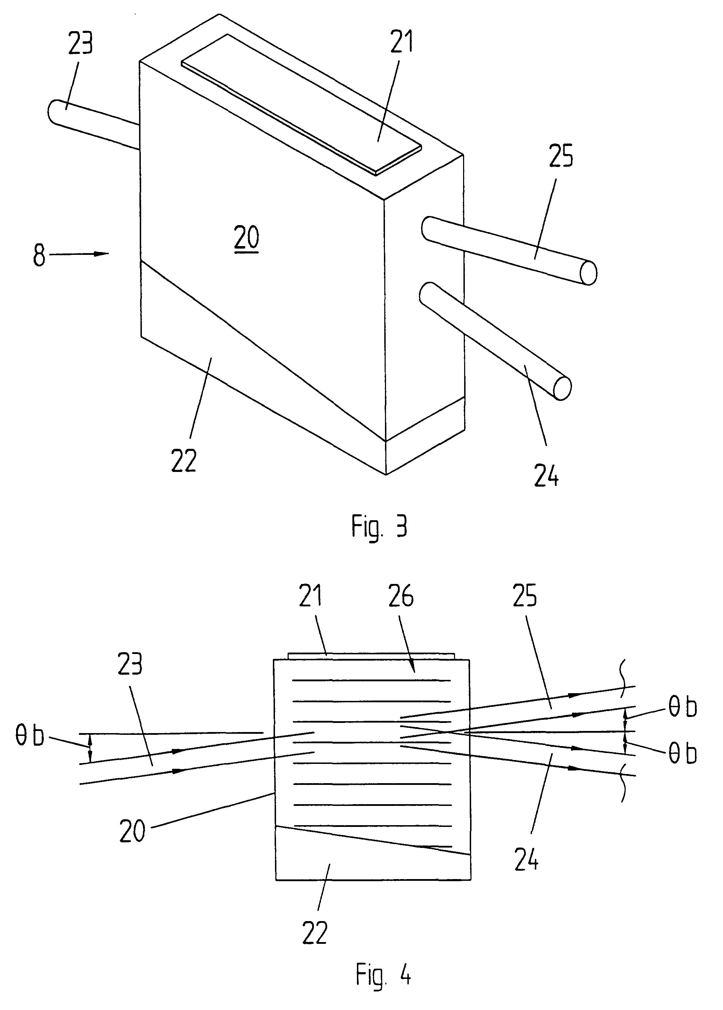

Der prinzipielle Aufbau und die Funktionsweise des akusto-optischen Modulators 8 wird nun anhand der Figuren 3 und 4 beschrieben. Der Modulator 8 besteht aus einem quaderförmigen lichtdurchlässigen Medium 20, beispielsweise aus Flintglas oder aus Quarzglas, mit einem piezoelektrischen Wandler 21 auf der oberen Seite und einem akustischen Absorber 22 auf der unteren Seite. Am Wandler 21 wird ein radiofrequentes Signal angelegt, so dass von oben nach unten ein Schallfeld 26 durch das lichtdurchlässige Medium 20 wandert, das für den einfallenden Laserstrahl 23 eine Art von Beugungsgitter bildet. Ähnlich wie beim röntgenoptischen Beugungsgitter wird die höchste Ablenkeffizienz erreicht beim Bragg-Winkel $\theta_b$, welcher definiert ist als

$$\theta_b = \lambda \ \times \ F \ / \ 2V$$

$\lambda$ = Wellenlänge des einfallenden Laserstrahles 23
F = Frequenz des angelegten Schallfeldes 26
V = Geschwindigkeit der Schallwelle im Medium 20

Der abgelenkte austretende Laserstrahl 24 wird in bekannter Weise mit der Strahlung erster Ordnung und Intensität $I_1$ und der nicht-abgelenkte austretende Laserstrahl 25 mit der Strahlung nullter Ordnung und Intensität $I_0$ bezeichnet. Die Intensität des abgelenkten Laserstrahles 24 oder die Ablenk-effizienz ist eindeutig abhängig von der angelegten elektrischen RF-Leistung, so dass diese zur Amplitudenmodulation des einfallenden Laserstrahles 23 verwendet werden kann, wobei die Intensität $I_1$ bis zu 90 % der Intensität des einfallenden Laserstrahles 23 erreicht. Der nicht-abgelenkte Laserstrahl 25 wird im Absorber 10 (vergleiche Figur 1) vernichtet. Die Ablenkeffizienz hängt hauptsächlich von der sorgfältigen Anpassung des Schallfeldes 26 in Geometrie und Divergenz an die Parameter des gepulsten Laserstrahles 23 ab. Mit dem akusto-optischen Modulator 8 kann daher die Amplitude des Laserstrahles 23 sehr schnell und genau an die Erfordernisse angepasst werden, da der Aufbau des Schallfeldes 26 innerhalb des lichtdurchlässigen Mediums 20 mit Schallgeschwindigkeit erfolgt.

Wenn die Laserlichtquelle 11 in der multimoden Betriebsweise eingesetzt wird, ist wegen des grösseren Durchmessers und der grösseren Divergenz des Laserstrahles 13 im Vergleich zu einem Laserstrahl mit $TEM_{00}$-Modus eine Schallfeldhöhe von etwa 8 mm erforderlich, welche bei einer elektrischen RF-Leistung von etwa 50 W erhalten wird. Im Dauerbetrieb führt jedoch eine solch hohe elektrische RF-Leistung zur sehr schnellen Zerstörung des lichtdurchlässigen Mediums 20. Es hat sich jedoch herausgestellt, dass ein diskontinuierlicher Betrieb auch bei solch hohen RF-Leistungen das lichtdurchlässige Medium 20 nicht zerstört.

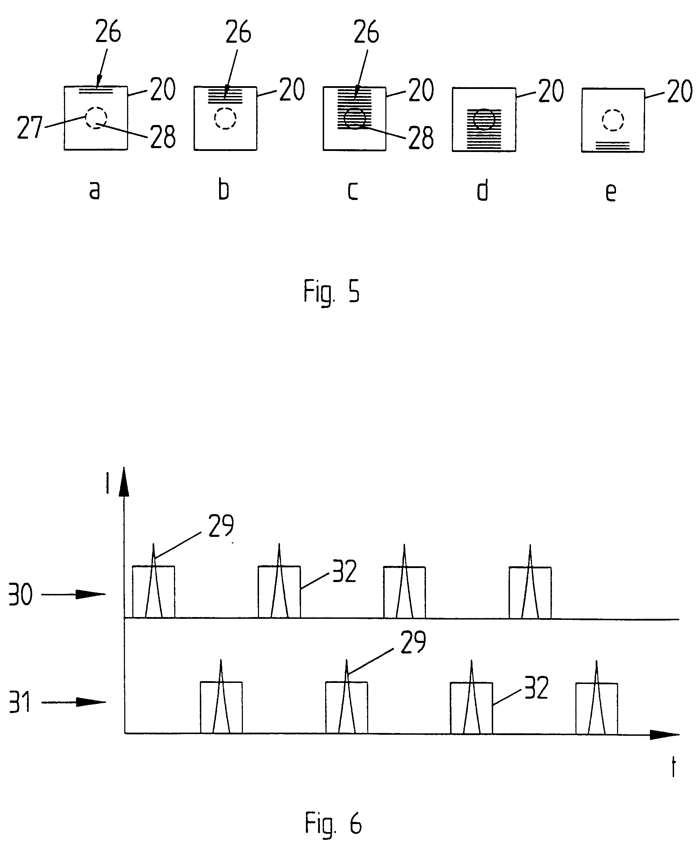

Diese Betriebsart kann anhand der Figuren 5a bis 5e, welche je eine Momentaufnahme des akusto-optischen Modulators an aufeinanderfolgenden Zeitpunkten darstellen, wie folgt erklärt werden:
Wenn eine elektrische RF-Leistung an den piezoelektrischen Wandler 21 angelegt wird, breitet sich das Schallfeld 26 von der oberen Seite des lichtdurchlässigen Mediums 20 mit Schallgeschwindigkeit aus (vergleiche Figuren 5a und 5b). Das Schallfeld 26 hat dabei den äusseren Umfang 27 des durch das Medium 20 hindurchtretenden Laserstrahlimpulses 28 noch nicht erreicht. Mit der gestrichelten Darstellung des Umfangs 27 wird angedeutet, dass der Laserstrahlimpuls 28 das Medium 20 noch nicht erreicht hat. Erst wenn das Schallfeld 26 den äusseren Umfang 27 voll abdeckt (Figur 5c), wird der Laserstrahlimpuls 28 durch das Medium hindurchgeschickt. Die an den piezoelektrischen Wandler 21 angelegte elektrische RF-Leistung wird anschliessend abgeschaltet, so dass das Ende des Schallfeldes 26 den Laserstrahlengang 28 immer noch voll abdeckt, wenn dieser aus dem lichtdurchlässigen Medium 20 austritt (Figur 5d). Das Schallfeld 26 verlässt dann das lichtdurchlässige Medium 20 und wird im akustischen Absorber 22 (Figur 3) vernichtet. Die Einschaltdauer des Schallfeldes 26 ergibt sich somit prinzipiell aus dem Durchmesser und der Durchlaufzeit der Laserstrahlimpulse 28 und aus der Schallgeschwindigkeit des angeregten Schallfeldes 26 im lichtdurchlässigen Medium 20. Dazu muss die Zeitdauer berücksichtigt werden, bis das Schallfeld 26 sich bis zum Umfang 27 des hindurchzutretenden Laserstrahlimpulses 28 ausgebreitet hat. Es findet somit eine sequentielle und räumlich deckungsgleiche Überlagerung des Laserstrahlimpulses 28 mit dem Schallfeld 26 statt, ohne dass ein Verlust der Strahlqualität hingenommen werden muss.

Die Laserleistung wird beispielsweise für die Bohrung der Rasternäpfchen 18 mit einem Tastverhältnis von 1:33 abgegeben. Bei einem Durchmesser von etwa 8 mm für den multimoden Laserstrahlimpuls mit dem Strahlengang 28 ergibt das eine Einschaltzeit für das Schallfeld 26 von beispielsweise etwa 3 µs, was ein Zehnfaches der Zeitdauer des einzelnen Laserstrahlimpulses von beispielsweise 300 ns darstellt. Die mittlere thermische Belastung des lichtdurchlässigen Mediums 20, die durch das Schallfeld 26 bewirkt wird, kann daher um einen Faktor 10 reduziert werden. Es werden somit sehr hohe Ablenkeffizienzen für eine multimode Laserstrahlung erreicht. Diese Betriebsart hat den zusätzlichen Vorteil einer erheblichen Energieeinsparung.

Erfindungsgemäss wird die Geschwindigkeit der Lasergravurmaschine 1 zusätzlich dadurch erhöht, dass wie in Figur 2 dargestellt, mehrere Laserlichtquellen 11a, 11b parallel eingesetzt werden, deren Laserstrahlen 13a und 13b koaxial auf die optische Linse 7 gerichtet sind. Dies bedeutet, dass beispielsweise der Laserstrahl 13a durch den akusto-optischen Modulator 8a abgelenkt wird und dann geradlinig in der optischen Achse der Linse 7 durch den akusto-optischen Modulator 8b hindurchgeht. Dazu ist der Laserstrahlpuls 30 der Laserlichtquelle 11a zeitlich verschoben zum Laserstrahlpuls 31 der Laserlichtquelle 11b. Das Tastverhältnis und die maximale Amplitude der beiden Laserlichtquellen 11a und 11b ist jedoch genau gleich. Die zu einem einzelnen Laserstrahlimpuls 29 gehörende Sprungfunktion 32 für das Schallfeld 26 ist ebenfalls dargestellt. Die zeitliche Verschiebung zwischen den Laserstrahlpulsen 30 und 31 ist nun so gewählt, dass diese sich nicht überlappen. Eine weitere Bedingung für diese Betriebsart ist, dass das Schallfeld 26 des akusto-optischen Modulators 8b nicht eingeschaltet ist, wenn ein Laserstrahlimpuls 29 des Laserstrahlpulses 30 hindurchgeschickt wird. Die Laserlichtquellen 11a und 11b und die in den akusto-optischen Modulatoren 8a und 8b erzeugten Schallfelder 26 werden dazu paarweise synchronisiert und gegeneinander um eine ganzzahlige Bruchzahl des Taktverhältnisses zeitlich verschoben. Die maximale Anzahl überlagerter Laserstrahlen, die in der obigen Weise sequentiell betrieben werden können, ergibt sich aus dem Verhältnis der Impulsdauer eines einzelnen Laserstrahlimpulses 29 zur Einschaltdauer des Schallfeldes 26 multipliziert mit dem Tastverhältnis der Laserstrahlquelle 11. Bei einer Impulsdauer von etwa 300 ns und einer Einschaltdauer von etwa 3 µs ergibt dies bei einem Tastverhältnis von 1:33 eine maximal Anzahl von elf Laserlichtquellen, d.h. in der Praxis zehn. Somit lässt sich die Dreh- und Bearbeitungsgeschwindigkeit der Oberfläche des Tiefdruckzylinders 2 nochmals um das Zehnfache erhöhen. Um bei diesen hohen Drehgeschwindigkeiten Verzerrungen der zu bildenden Rasternäpfchen 18 auszugleichen, kann der akusto-optische Modulator 8 zusätzlich mit einer nicht-dargestellten Steuerung versehen sein, die ein der angelegten elektrischen RF-Leistung überlagertes Frequenzmodulationssignal an den akusto-optischen Modulator anlegt, um den Laserstrahl 13 in der Art nachzuführen, wie in der eingangs genannten WO-A-92/09399 ausführlich beschrieben.

## Patentansprüche

1. Verfahren zur Herstellung von Rasternäpfchen (18) in der Oberfläche eines sich drehenden Tiefdruckzylinders (2) mittels wenigstens einem gepulsten Laserstrahl (13a; 13b), der mittels einem akustooptischen Modulator (8a; 8b) umgelenkt und über eine optische Linse (7) auf die zu bearbeitende Oberfläche des Tiefdruckzylinders (2) gerichtet wird, **dadurch gekennzeichnet, dass** mehrere gepulste Laserstrahlen (13a, 13b) mit demselben Taktverhältnis, jedoch mit zueinander zeitlich verschobenen Laserstrahlimpulsen erzeugt und je einem akusto-optischen Modulator (8a; 8b) zugeführt werden, von dem die Laserstrahlen (13a, 13b) durch Beugung auf die optische Achse der Linse (7) gelenkt und die einzelnen Laserstrahlimpulse entsprechend dem Volumen des auszubildenden Rasternäpfchens (18) in ihrer Impulsleistung gesteuert werden.

2. Verfahren nach Anspruch 1, **dadurch gekennzeichnet, dass** jeder akusto-optische Modulator (8a; 8b) ein mit der Durchlaufzeit des zugehörigen Laserstrahlimpulses durch das durchlässige Medium (20) des Modulators (8a; 8b) zeitlich überlappendes Schallfeld (26) erzeugt.

3. Verfahren nach Anspruch 1 oder 2, **dadurch gekennzeichnet, dass** die gepulsten Laserstrahlen (13a, 13b) in einen Lichtwellenleiter (15) eingespeist und so auf die optische Achse der Linse (7) ausgerichtet werden.

4. Verfahren nach Anspruch 1, 2 oder 3, **dadurch gekennzeichnet, dass** die Laserstrahlen (13a, 13b) durch die zugehörigen akusto-optische Modulatoren (8a, 8b) entsprechend der Drehgeschwindigkeit des zu bearbeitenden Tiefdruckzylinders (2) simultan nachgeführt werden.

5. Verfahren nach einem der Ansprüche 1 bis 4, **dadurch gekennzeichnet, dass** die Laserstrahlen (13a, 13b) als multimode TEM-Wellen emittiert werden.

6. Vorrichtung zur Herstellung von Rasternäpfchen (18) in der Oberfläche eines sich drehenden Tiefdruckzylinders (2) mit wenigstens einer Laserstrahlquelle (11a; 11b), einer den von der Laserstrahlquelle (11a; 11b) abgegebenen Laserstrahl (13a; 13b) auf die zu bearbeitende Oberfläche richtenden optischen Linse (7) und einem akusto-optischen Modulator (8a; 8b) zur Umlenkung des Laserstrahles (13a; 13b) auf die optische Achse der Linse (7), **dadurch gekennzeichnet, dass** mehrere Laserlichtquellen (11a, 11b) vorgesehen sind, die gepulste Laserstrahlen (13a, 13b) mit gleichem Taktverhältnis, jedoch mit zueinander zeitlich verschobenen Laserstrahlimpulsen erzeugen, dass jeder Laserlichtquelle (11a; 11b) ein akusto-optischer Modulator (8a; 8b) zugeordnet ist, welcher den entsprechenden Laserstrahl (13a; 13b) durch Beugung auf die optische Achse der Linse (7) lenkt und die einzelnen Laserstrahlimpulse entsprechend dem Volumen des auszubildenden Rasternäpfchens (18) in ihrer Impulsleistung steuert.

7. Vorrichtung nach Anspruch 6, **dadurch gekennzeichnet, dass** jedem akusto-optischen Modulator (8a, 8b) eine Schalteinrichtung (9a; 9b) zugeordnet ist, welche das erzeugte Schallfeld (26) mit der Durchlaufzeit des Laserstrahlenganges (28) durch das lichtdurchlässige Medium (20) des Modulators (8a, 8b) zeitlich überlappend synchronisiert.

8. Vorrichtung nach einem der Ansprüche 6 oder 7, **dadurch gekennzeichnet, dass** mindestens zwischen den akusto-optischen Modulatoren (8a, 8b) und der optischen Linse (7) ein Lichtwellenleiter (15) angeordnet ist.

9. Vorrichtung nach einem der Ansprüche 6, 7 oder 8, **dadurch gekennzeichnet, dass** eine weitere Steuerung mit dem akusto-optischen Modulator (8a, 8b) verbunden ist, die durch eine Modulation des Schallfeldes im akusto-optischen Modulator (8a, 8b) den Laserstrahl (13a; 13b) entsprechend der Drehgeschwindigkeit des zu bearbeitenden Tiefdruckzylinders (2) nachführt.

## Claims

1. Method for producing wells (18) in the surface of a rotating rotogravure cylinder (2) by means of at least one pulsed laser beam (13a; 13b) which is deflected by means of an associated optoacoustic modulator (8a, 8b) and directed via an optical lens (7) onto the surface of the rotogravure cylinder (2) to be processed, **characterized in that** a plurality of pulsed laser beams (13a, 13b) with the same pulse duty factor, but with laser beam pulses which are offset in time relative to one another are generated and each directed to an optoacustic modulator, by which the laser beams (13a, 13b) are deflected by diffraction onto the optical axis of the lens (7) and by which the individual laser beam pulses are controlled in their pulse power in accordance with the volume of the well (18) to be formed.

2. Method according to Claim 2, **characterized in that** each optoacoustic modulator (8) periodically generates a sound field (26) which temporally overlaps the passage time of a respective laser beam pulse (28) through the transparent medium (20) of the modulator (8).

3. Method according to Claims 1 or 2, **characterized in that** the pulsed laser beams are fed into an optical waveguide (15) and are thereby aligned with the optical axis of the lens (7).

4. Method according to one of Claims 1 to 3, **characterized in that** the laser beams (13a, 13b) are simultaneously adjusted by the respective optoacoustic modulators (8) in accordance with the rotational speed of the rotogravure cylinder (2) to be processed.

5. Method according to one of Claims 1-4, **characterized in that** the laser beams (13a, 13b) are emitted as a multimode TEM waves.

6. Device for producing wells (18) in the surface of a rotogravure cylinder (2) with a laser beam source (11), an optical lens (7) which directs the laser beam (13) onto the surface to be processed, and a optoacustic modulator for deflection of light onto the optical axis of the lens (7), **characterized in that** a plurality of pulsed laser light sources (11a, 11b) are provided, which generate pulsed laser beams with the same pulse duty factor, but with laser beam pulses offset in time relative to one another, **in that** each laser light source (11a, 11b) is assigned an optoacoustic modulator (8a, 8b) which deflects the laser beam (13a, 13b) of the associated laser light source (11a, 11b) by diffraction onto the optical axis of the lens (7), and controls the individual laser beam pulses in their pulse power in accordance with the volume of the well (18) to be formed.

7. Device according to Claim 6, **characterized in that** each optoacoustic modulator (8a, 8b) is assigned a switching device (9) which synchronizes the sound field (26) generated with the passage time of the laser beam path (28) through the transparent medium (20) of the modulator (8a, 8b) in a temporally overlapping manner.

**8.** Device according to one of Claims 6 or 7, **characterized in that** an optical waveguide (15) is arranged at least between the optoacoustic modulator (8) and the optical lens (7).

**9.** Device according to one of Claims 6, 7 or 8, **characterized in that** a further control is connected to the optoacoustic modulator (8), which control adjusts the laser beam (12) by modulation of the sound field in the optoacoustic modulator (8) in accordance with the rotational speed of the rotogravure cylinder (2) to be processed.

## Revendications

**1.** Procédé pour fabriquer des coupelles de tramage (18) dans la surface d'un cylindre de gravure en rotation (2) à l'aide d'au moins un rayon laser pulsé (13a, 13b), qui est dévié à l'aide d'un modulateur acousto-optique (8a, 8b) et qui est dirigé sur la surface à usiner du cylindre de gravure (2) par le biais d'une lentille optique (7), **caractérisé en ce que** plusieurs rayons laser pulsés (13a, 13b) ayant le même rapport cyclique, mais avec des impulsions de rayon laser décalées dans le temps les unes par rapport aux autres, sont générés et acheminés chacun à un modulateur acousto-optique (8a, 8b) d'où les rayons laser (13a, 13b) sont déviés par diffraction sur l'axe optique de la lentille (7) et la puissance de chacune des impulsions de rayon laser est commandée en fonction du volume de la coupelle de tramage (18) à façonner.

**2.** Procédé selon la revendication 1, **caractérisé en ce que** chaque modulateur acousto-optique (8a, 8b) génère un champ sonore (26) qui est superposé dans le temps avec le temps de passage de l'impulsion de rayon laser correspondante à travers le support transparent (20) du modulateur (8a, 8b).

**3.** Procédé selon la revendication 1 ou 2, **caractérisé en ce que** les rayons laser pulsés (13a, 13b) sont injectés dans une fibre optique (15) et sont ainsi dirigés sur l'axe optique de la lentille (7).

**4.** Procédé selon la revendication 1, 2 ou 3, **caractérisé en ce que** les rayons laser (13a, 13b) sont suivis simultanément par les modulateurs acousto-optiques (8a, 8b) correspondants en fonction de la vitesse de rotation du cylindre de gravure à usiner (2).

**5.** Procédé selon l'une des revendications 1 à 4, **caractérisé en ce que** les rayons laser (13a, 13b) sont émis sous la forme d'ondes TEM multimodales.

**6.** Dispositif pour fabriquer des coupelles de tramage (18) dans la surface d'un cylindre de gravure en rotation (2) comprenant au moins une source de rayon laser (11a, 11b), un rayon laser (13a, 13b) émis de la source de rayon laser (11a, 11b) sur la lentille optique (7) dirigée vers la surface à usiner et un modulateur acousto-optique (8a, 8b) pour dévier le rayon laser (13a, 13b) sur l'axe optique de la lentille (7), **caractérisé en ce que** plusieurs sources de rayon laser (11a, 11b) sont prévues, lesquelles génèrent des rayons laser pulsés (13a, 13b) ayant le même rapport cyclique, mais avec des impulsions de rayon laser décalées dans le temps les unes par rapport aux autres, qu'un modulateur acousto-optique (8a, 8b) est associé à chaque source de rayon laser (11a, 11b), lequel dévie par diffraction le rayon laser (13a, 13b) correspondant sur l'axe optique de la lentille (7) et commande la puissance de chacune des impulsions de rayon laser en fonction du volume de la coupelle de tramage (18) à façonner.

**7.** Dispositif selone la revendication 6, **caractérisé en ce qu'**un dispositif de commande (9a, 9b) est associé à chaque modulateur acousto-optique (8a, 8b), lequel synchronise le champ sonore (26) généré de manière superposée dans le temps avec le temps de passage du rayon laser (28) à travers le support transparent (20) du modulateur (8a, 8b).

**8.** Dispositif selon l'une des revendications 6 ou 7, **caractérisé en ce qu'**une fibre optique (15) est disposée au moins entre les modulateurs acousto-optiques (8a, 8b) et la lentille optique (7).

**9.** Dispositif selon l'une des revendications 6, 7 ou 8, **caractérisé en ce qu'**une commande supplémentaire est reliée au modulateur acousto-optique (8a, 8b), laquelle suit le rayon laser (13a, 13b) en fonction de la vitesse de rotation du cylindre de gravure à usiner (2) par une modulation du champ sonore dans le modulateur acousto-optique (8a, 8b).

Fig. 1

Fig. 2

23

21

25

8 →

20

22

24

Fig. 3

21   26   25

23

θb

θb

θb

20

24

22

Fig. 4

Fig. 5

Fig. 6